# EUROPEAN PATENT APPLICATION

(11) **EP 1 598 111 A1**
(43) Date of publication of application: **23.11.2005**
(21) Application number: 04252833.1
(22) Date of filing: 15.05.2004
(51) Int. Cl.: B01J 35/10, F01N 3/022, F01N 3/28, B01D 46/24, B01D 53/94

(54) **Catalyst concentration gradient in a catalysed filter**

(71) Applicant: Delphi Technologies, Inc., Troy, MI 48007 (US)
(72) Inventor: Lahousse, Christophe, 67000 Arlon (FR)
(74) Representative: Jones, Keith William

(57) **Abstract**

According to a first aspect of the invention there is provided a catalyst concentration gradient in a first direction and a second direction perpendicular to the first direction and intersecting the first direction at a central point characterised in that the concentration gradient in the first direction comprises a first region of low catalyst concentration proximal to the central point and a second region of increasing concentration radiating outwards therefrom; and the catalyst concentration in the second direction also steadily increases from the central point.

## Description

The present invention relates to a catalysed filter and in particular a catalyst concentration gradient in a catalysed filter.

### Background to the Invention

The emissions from a diesel engine include gases and particulate matter (PM). Gaseous emissions typically include gaseous hydrocarbons (HC) and oxides of carbon, sulfur and nitrogen. Particulate matter typically includes combustible particles such as carbon soot and non-combustible materials such as metals from engine wear and ash from lubricating oils.

Clean diesel engines typically employ two devices for treating engine emissions. These devices are generically known as diesel oxidation catalysts and diesel particulate filters (or diesel traps).

Diesel oxidation catalysts are primarily used to reduce gaseous emissions by promoting chemical changes in the exhaust gas. Diesel particulate filters, in contrast, control particulate matter emissions by physically trapping the particulate matter. Since the present invention relates to diesel particulate filters and methods for their regeneration, it is useful at this point to briefly review the structure and operation of these filters.

The following discussion of diesel particulate filters will be supported by the accompanying drawings in which:
Figure 1 is a perspective view of a traditional diesel particulate filter;
Figure 2a is a perspective view of a conventional segmented diesel particulate filter;
Figure 2b is a top plan view of the segmented diesel particulate filter shown in Figure 2a;
Figure 2c is a sectional view of the segmented diesel particulate filter shown in Figure 2a, taken along the axis X-X; and
Figure 3 is cut-away view of a continuously regenerating trap (Trade Mark).

### 1. Diesel Particulate Filters

A diesel particulate filter is installed in the exhaust stream of a diesel engine to physically trap its particulate emissions, whilst allowing the exhaust gases to escape through the exhaust pipe.

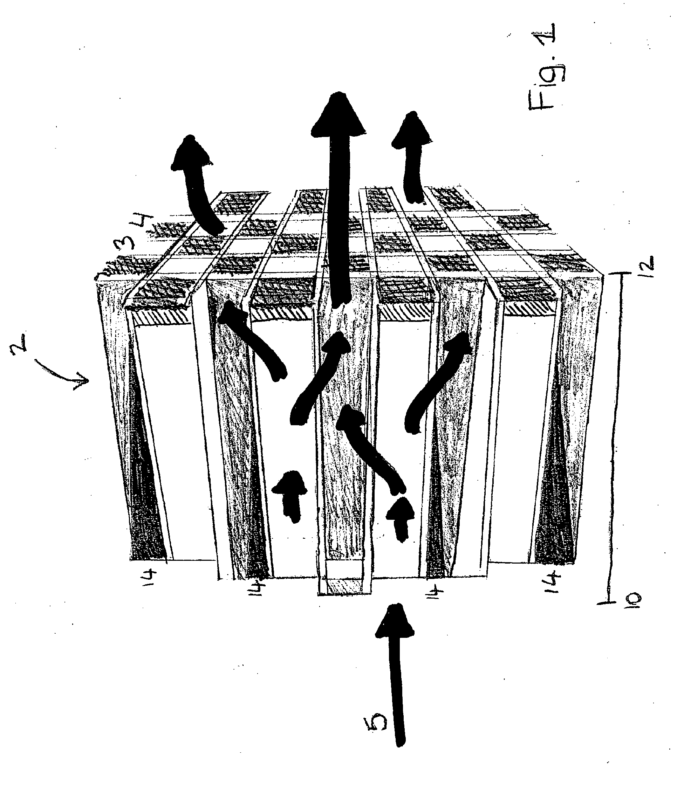

Figure 1 shows a perspective view of a conventional diesel particulate filter. A diesel particulate filter 2 is typically constructed from a ceramics material such as silicon carbide, cordierite or sintered metal and comprises a plurality of cells 3 arranged in a honeycomb structure. The ends of alternating cells 3, 4 are sealed at alternating sides of the filter 2.

A particulate-laden exhaust gas 5 enters a first side 10 of the diesel particulate filter 2, and in particular, enters the cells 3 whose ends are open at the first side 10. However, since the ends of these cells are sealed at the opposing side 12 of the filter 2, the exhaust gas cannot exit from the filter 2 through these cells. Instead, the exhaust gas passes through the porous walls of the cells 3 into adjacent cells 4 (i.e. whose ends are open at the opposing side 12 of the filter 2). The exhaust gas then exits the filter 2 through the cells 4. In the process of passing through the walls between adjacent cells, the particulate material suspended in the exhaust gas becomes trapped on the cell walls.

### (a) Regeneration of Diesel Particulate Filters

As the filter 2 collects soot, the passage of exhaust gas through the cells of the filter is progressively blocked and the back-pressure in the filter 2 increases. In order to prevent the cells from becoming completely blocked by soot deposits, it is necessary to periodically clean the filter of its particulate matter. One method of removing the soot deposits from a diesel particulate filter is to raise the temperature of the filter to above 650°C so that combustion of the soot occurs. In this case, the soot (which is almost pure carbon) is oxidised to gaseous carbon dioxide and carbon monoxide and passes through the filter with the rest of the exhaust gas.

However, the exhaust from a diesel engine does not always achieve the 650°C temperature necessary for soot combustion. One way of overcoming this problem is to coat the surface of the diesel particulate filter with catalyst material. Catalyst materials typically include platinum or platinum group metals (PGM). The catalyst coating has the effect of reducing the threshold temperature for soot combustion. Other methods of reducing the carbon combustion temperature involve providing the diesel particle filter with a catalytic material comprising a platinum, cerium or aluminium-based catalyst and adding a cerium-based bi-metallic catalyst to the engine fuel.

In order to initiate the above regeneration process, the temperature in the exhaust system is typically raised to in excess of 600°C by post-injecting unburned fuel to raise the temperature in front of the filter. However, once the regeneration process has been initiated, a diesel particulate filter will be typically regenerated within approximately 10 to 15 minutes.

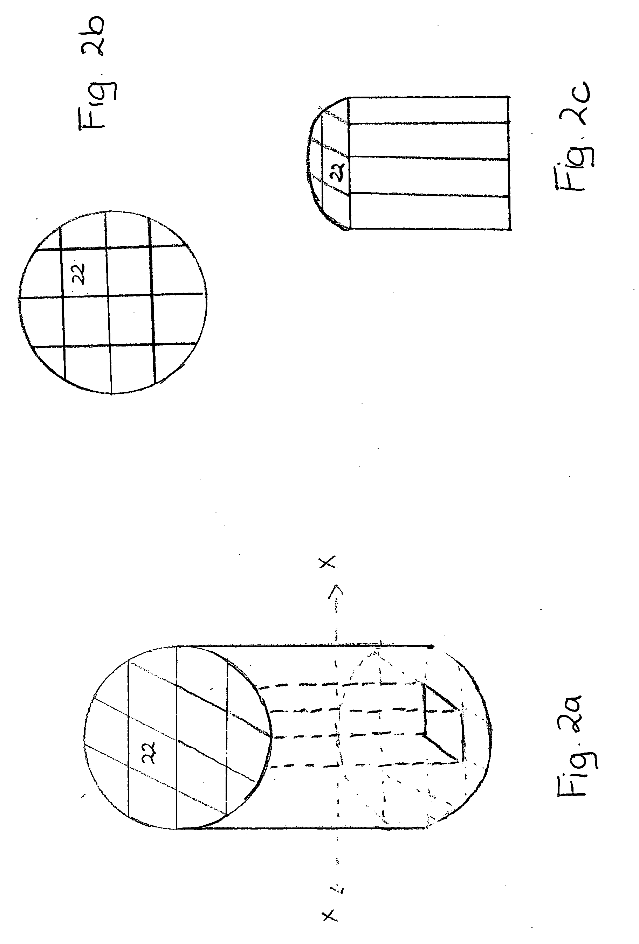

During the regeneration process, the temperatures within a diesel particulate filter can exceed 1000°C. Recent developments in the design of diesel particulate filters have led to segmented filter designs as shown in Figures 2a, 2b and 2c. A segmented particulate diesel filter 20 comprises approximately sixteen parallelepiped segments 22 cemented together. In use, the cement joints between the parallelepiped segments 22 relieve thermal stress within the filter.

### (b) Continuously Regenerating Trap (Trade Mark)

US Patent No. 4902487 describes a system for the effective combustion and removal of particulate material from a diesel particulate filter at temperatures of 225° to 300°C.

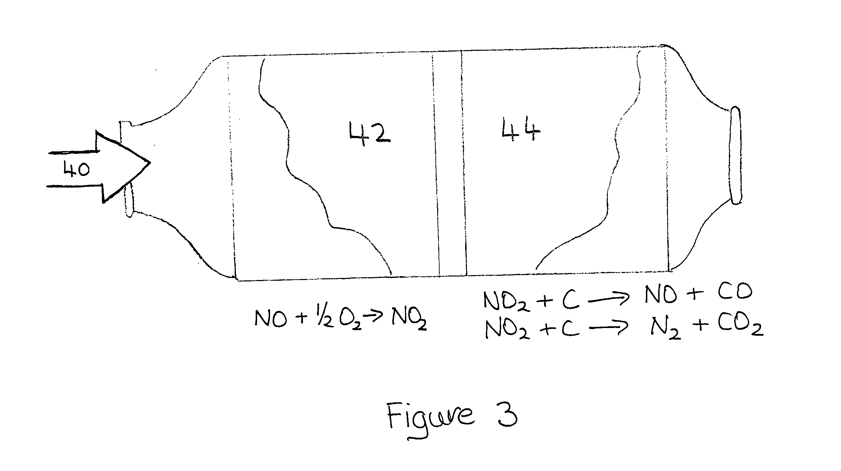

Referring to Figure 3, the system involves contacting nitrogen monoxide in the exhaust stream 40 from a diesel engine with a honeycomb substrate coated with a platinum catalyst 42. The platinum catalyst 42 catalyses the conversion of nitrogen monoxide into nitrogen dioxide by reaction with oxygen from the exhaust gas 40 as follows:

NO +1/2 O₂ -> NO₂

The treated exhaust gas is then passed downstream to a diesel particulate filter 44 on which particulate matter is entrapped. The nitrogen dioxide in the treated exhaust gas is absorbed in the particulate matter deposits on the filter 44. This enables the soot deposits to be ignited and removed as nitrogen gas (N₂) and water at lower temperatures than the 650°C combustion temperature of carbon.

The reaction of NO₂ with the particulate matter deposits in the diesel particulate filter to facilitate the low temperature combustion of the deposits can be described by the following reactions:

NO₂ +C -> NO +CO

NO₂ + C -> N₂ +CO₂

### 2. Problems with the Prior Art

As mentioned above, the continuously regenerating trap uses nitrogen oxides (NOₓ) to burn soot. This type of system is limited to engines in which the NOₓ to soot emission ratio provides an excess of NOₓ. For most passenger car applications, NOₓ concentrations rarely if ever allow such a regeneration mode.

Nonetheless, for all regeneration applications, it is necessary to burn soot in the diesel particulate filter by raising the filter temperature. During this active regeneration process the temperature within a diesel particulate filter can exceed 1000°C. However, the temperature does not have a uniform distribution within the diesel particulate filter. Instead, a temperature gradient develops in the filter during regeneration, because the outer cells of the filter lose heat to the surroundings more quickly than the central cells. The difference in temperature between the outer cells and the central cells of the filter results in the soot in the centre of the filter being burned more quickly than soot in the outer cells. To further exacerbate the temperature differential between the centre and the edges of the filter, the soot in the centre of the filter releases more heat to the centre of the filter as the soot burns.

Within approximately 1 minute of the start of the regeneration process, substantially all of the central cells of the diesel particulate filter are rid of their soot deposits. However, since the outer cells are at a reduced temperature compared with the central cells, the outer cells still contain substantial soot deposits. Consequently, a back-pressure differential also develops within the diesel particulate filter, with the central cells of the filter having a lower back-pressure than the outer cells. As a result, the exhaust gas flow is concentrated in the central cells of the filter meaning that the heat provided by burning post-injected hydrocarbon is mostly released into the central channels of the diesel particulate filters.

With all of these factors contributing to the temperature differential between the central cells and the outer cells of the diesel particulate filter, it becomes increasingly difficult to maintain the outer cells of the filter at a sufficiently high temperature for soot combustion to take place.

The effect of the temperature gradient produced during regeneration is particularly detrimental in a segmented design filter with an insulating, non-porous cement between its segments. In this case, the non-porous cement creates a heat transfer barrier that further contributes to the preferential burning of the soot in the central segments of the filter. Furthermore, the volume preferentially cleaned is parallelpipedic instead of the cylindrical region produced in a non-segmental filter.

Regardless of the design of the diesel particulate filter, the net effect of the temperature gradient produced in the filter during regeneration is that fuel post-injection must be maintained for more than 10 minutes, even though most of the soot in the filter is actually burned off in the first minute of regeneration.

### Summary of the Invention

According to a first aspect of the invention there is provided a catalyst concentration gradient in a first direction and a second direction perpendicular to the first direction and intersecting the first direction at a central point characterised in that the concentration gradient in the first direction comprises a first region of low catalyst concentration proximal to the central point and a second region of increasing concentration radiating outwards therefrom; and the catalyst concentration in the second direction also steadily increases from the central point.

Preferably, the catalyst concentration in the first region remains constant.

Preferably, the catalyst concentration in the second region increases in a linear fashion.

Optionally, the catalyst concentration in the second region increases in a non-linear fashion.

According to a second aspect of the invention there is provided a diesel particulate filter comprising a inlet, an outlet and a substrate therebetween wherein the substrate is coated in a catalyst in a decreasing concentration in a first direction from the inlet to the outlet.

Preferably, the concentration of the catalyst also varies in a second direction perpendicular to the first direction and intersecting the first direction in the centre of the filter.

Preferably, the concentration of the catalyst in the second direction is lowest in the centre of the filter and increases on moving towards the periphery of the substrate.

According to a third aspect of the invention there is provided a segmented diesel particulate filter comprising an inlet, an outlet, a substrate therebetween comprised of a plurality of attachable segments characterised in that the substrate is coated in a catalyst in a decreasing concentration profile in a first direction from the inlet to the outlet.

Preferably, the segments are attachable to each other by cement and the decreasing concentration profile of the catalyst is designed to overcome the insulating effect of the cement.

Preferably, the concentration of the catalyst also varies in a second direction perpendicular to the first direction and intersecting the first direction in a first region located in the centre of the filter.

Desirably, the concentration of the catalyst in the second direction is lowest in the first region and increases in a direction radiating outwards therefrom towards the periphery of the filter.

Desirably, the volume of the first region is delimited by the volumes of the central segments of the filter.

According to a fourth aspect of the invention there is provided a use of the catalyst concentration gradient of the first aspect of the invention in a continuously regenerating trap (Trade Mark).

### Description and Drawings

Two embodiments of the invention will now be described by way of example only with reference to the accompanying drawings in which:

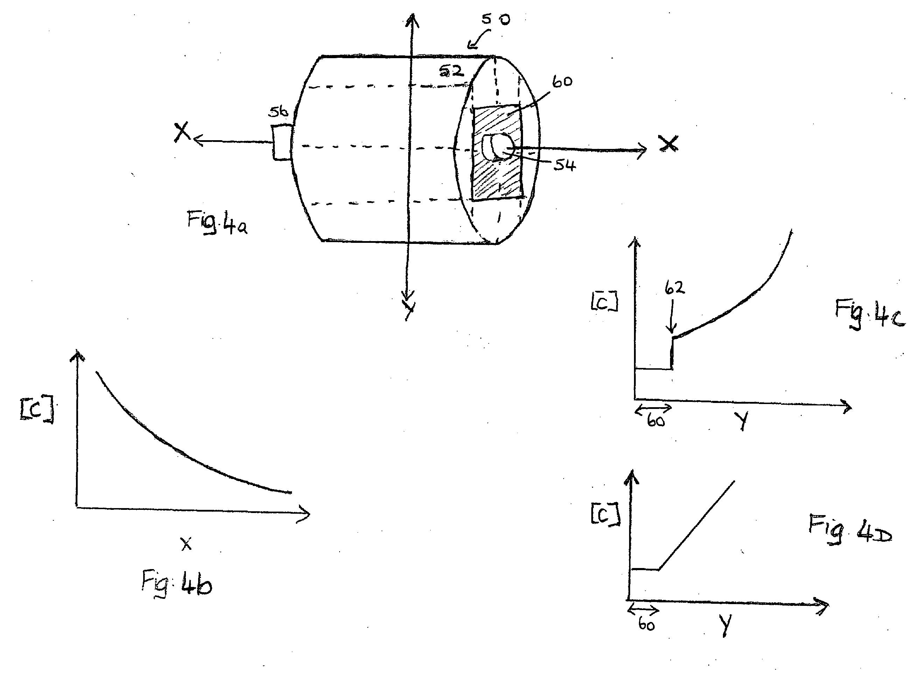

Figure 4a is a perspective view of a diesel particulate filter in accordance with the invention;
Figure 4b is a graph of catalyst concentration [C] along the axis X-X of the diesel particulate filter shown in Figure 4a;
Figure 4c is a graph of catalyst concentration [C] along the axis Y-Y of a first embodiment of the diesel particulate filter shown in Figure 4a; and
Figure 4d is an alternative graph of catalyst concentration [C] along the axis Y-Y of a second embodiment of the diesel particulate filter shown in Figure 4a.

Whilst the present invention is described in the context of a segmented design diesel particulate filter, it will be appreciated that the employing a catalyst in a tuned concentration gradient is applicable to other designs of diesel particulate filters.

Referring to Figure 4a, a segmented diesel particulate filter 50 in accordance with the invention comprises approximately sixteen cemented segments 52. Ingress and egress from the diesel particulate filter 50 is provided by an inlet 54 and an outlet 56 respectively.

The present invention manipulates the distribution of catalyst in the diesel particulate filter 50 to compensate for the effects of the temperature gradient developed in the filter 50 during regeneration. In particular, since hydrocarbons burn more rapidly with increased catalyst concentration, the present invention specifically tailors the lateral and longitudinal distribution of the catalyst in the diesel particulate filter 50 to ensure a uniform temperature gradient throughout the filter 50.

Referring to Figures 4c and 4d, the catalyst distribution is also specifically tailored to the parallelepiped segmental design of the segmented diesel particulate filter 50. In particular, the lateral catalyst distribution is designed to provide a fixed minimal catalyst concentration (i.e. square catalyst concentration gradient 140) in a central region 60 of the segmented diesel particulate filter 50, wherein the volume of the central region 60 is limited by the volume of the central segments 52 of the filter 50.

The lateral catalyst distribution is further designed to provide a gradient of increasing concentration radiating outwards from the central region 60 towards the periphery of the segmented diesel particulate filter 50 and fitted to the heat loss surface.

In particular, referring to Figure 4c, in a first embodiment of the invention the catalyst concentration [C] in the lateral direction undergoes a step change 62 on moving from the central region 60 of the segmented diesel particulate filter 50. From this point onwards, the catalyst concentration increases in a non-linear fashion towards the periphery of the filter 50.

Referring to Figure 4d, in a second embodiment of the invention, the catalyst concentration [C] in the lateral direction increases in a linear fashion on moving from the central region 60 towards the periphery of the filter 50.

The above-described concentration gradients effectively decrease the self-propagating effect of the regeneration process which otherwise leads to the preferential cleaning of the central cells of the diesel particulate filter over the peripheral cells.

In a traditional diesel particulate filter the burning process is primarily focussed in the fuel and oxygen rich regions close to the filter inlet. However, in the process of escaping from the traditional diesel particulate filter, the heat generated during the burning process is typically accumulated at the outlet from the filter.

Referring to Figure 4b, in view of the longitudinal temperature profile in a conventional diesel particulate filter, the catalyst concentration in the diesel particulate filter 50 of the present invention is also varied along the primary axis (X-X) of the filter 50. It should be noted that this longitudinal catalyst concentration gradient complements the above-described lateral catalyst concentration gradient (i.e. along the secondary axis Y-Y) of the diesel particulate filter 50.

In particular, the concentration profile of the catalyst along the axis X-X of the diesel particulate filter 50 is designed so that the concentration of the catalyst is highest proximal to the filter inlet 54 and gradually decreases on moving towards the filter outlet 56. This ensures that less heat is focussed at the filter outlet 56 and a uniform temperature profile is maintained along the primary axis of the diesel particulate filter during the regeneration process.

It should be noted that the above-described longitudinal catalyst concentration gradient is applicable to both embodiments of the present invention.

The overall effect of both of the above-described catalyst concentration profiles is that a uniform temperature distribution is maintained throughout the entire diesel particulate filter during the regeneration process. This enables all the soot in the filter to be burned off at the same rate and ensures that regeneration is completed in a time period of approximately 1 minute as opposed to the 10 to 15 minute regeneration time of conventional diesel particulate filters.

It will be appreciated that the catalyst concentration profiles of the present invention could also be used in a continuously regenerating trap (Trade Mark).

In use, a catalyst is coated onto a diesel particulate filter in accordance with the required concentration profile by a concentric device (e.g. concentric coater). In particular, the concentric coater coats different regions of the substrate with different washcoats in one or two passes.

Modifications and alterations may be made to the above without departing from the scope of the invention.

## Claims

1. A catalyst concentration gradient in a first direction and a second direction perpendicular to the first direction and intersecting the first direction at a central point **characterised in that** the concentration gradient in the first direction comprises a first region (60) of low catalyst concentration proximal to the central point and a second region of increasing concentration radiating outwards therefrom; and the catalyst concentration in the second direction also steadily increases from the central point.

2. A catalyst concentration gradient as claimed in Claim 1 wherein the catalyst concentration in the first region remains constant.

3. A catalyst concentration gradient as claimed in Claim 1 or Claim 2 wherein the catalyst concentration in the second region increases in a linear fashion.

4. A catalyst concentration gradient as claimed in Claim 1 or Claim 2 wherein the catalyst concentration in the second region increases in a non-linear fashion.

5. A diesel particulate filter comprising an inlet (54), an outlet (56) and a substrate therebetween wherein the substrate is coated in a catalyst in a decreasing concentration in a first direction from the inlet (54) to the outlet (56).

6. A diesel particulate filter as claimed in Claim 5 wherein the concentration of the catalyst also varies in a second direction perpendicular to the first direction and intersecting the first direction in the centre of the filter.

7. A diesel particulate filter as claimed in Claim 5 or Claim 6 wherein the concentration of the catalyst in the second direction is lowest in the centre of the filter and increases on moving towards the periphery of the substrate.

8. A segmented diesel particulate filter comprising an inlet (54), an outlet (56), and a substrate therebetween comprised of a plurality of attachable segments (52) **characterised in that** the substrate is coated in a catalyst in a decreasing concentration profile in a first direction from the inlet (54) to the outlet (56).

9. A segmented diesel particulate filter as claimed in Claim 8 wherein the segments (52) are attachable to each other by cement and the decreasing concentration profile of the catalyst is designed to overcome the insulating effect of the cement.

10. A segmented diesel particulate filter as claimed in Claim 8 or Claim 9 wherein the concentration of the catalyst also varies in a second direction perpendicular to the first direction and intersecting the first direction in a first region (60) located in the centre of the filter.

11. A segmented diesel particulate filter as claimed in any of Claims 8 to 10, wherein the concentration of the catalyst in the second direction is lowest in the first region and increases in a direction radiating outwards therefrom towards the periphery of the filter.

12. A segmented diesel particulate filter as claimed in any of Claims 8 to 11, wherein the volume of the first region is delimited by the volumes of the segments (52) in the centre of the filter.

13. A use of a catalyst concentration gradient as claimed in any of Claims 1 to 4 in a continuously regenerating trap (Trade Mark).
